# EUROPEAN PATENT APPLICATION

(11) **EP 4 661 440 A1**
(43) Date of publication of application: **10.12.2025**
(21) Application number: 23919071.3
(22) Date of filing: 02.02.2023
(51) Int. Cl.: H04W 4/06, H04L 65/1016

(54) **INFORMATION TRANSMISSION METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Stöckeler, Ferdinand
(86) International application number: PCT/CN2023/074298
(87) International publication number: WO 2024/159495

(57) **Abstract**

Provided in the present disclosure are an information transmission method and apparatus, and a storage medium. The method comprises: sending to a second node a first message which comprises a temporary mobile group identity (TMGI), wherein the first message is used by the second node to determine non-public network (NPN) identifier information associated with the TMGI. The present disclosure can ensure that pieces of NPN identifier information determined by two nodes are the same, thereby improving the reliability of the use of a TMGI.

## Description

### FIELD

The present disclosure relates to the field of communications, and in particular relates to a method and an apparatus for transmitting information, and a storage medium.

### BACKGROUND

Currently, a temporary mobile group identity (TMGI) may be determined by a public land mobile network (PLMN) identity and a unique service identity (Service ID) in the PLMN to uniquely identify a multicast broadcast service (MBS) session.

In addition, an MBS in a non-public network (NPN) scenario is currently supported. For example, for the TMGI, an existing PLMN index may be multiplexed to indicate network identifier information of stand-alone NPN (SNPN) and public network integrated NPN (PNI-NPN).

However, in a radio access network sharing (RAN sharing) scenario, in a case where the PLMN index or a PLMN value in an existing TMGI is directly multiplexed to determine NPN identifier information, different NPN identifiers may be determined between two nodes interacting with each other, which ultimately leads to the incorrect use of the TMGI.

### SUMMARY

In order to solve the problems in the related art, embodiments of the present disclosure provide a method and an apparatus for transmitting information, and a storage medium.

According to a first aspect of embodiments of the present disclosure, a method for transmitting information is provided, performed by a terminal, including:
sending a first message including a temporary mobile group identity (TMGI) to a second node, in which the first message is used by the second node to determine non-public network (NPN) identifier information associated with the TMGI.

In an embodiment, the first message further includes:
a network index, in which the network index is used to determine, in a network identifier list, the NPN identifier information associated with the TMGI.

In an embodiment, the network index includes at least one of:
an NPN index; or
a public land mobile network (PLMN) index.

In an embodiment, the method further includes:
sending the network identifier list to the second node, to enable the second node determine, according to the network index and the network identifier list, the NPN identifier information associated with the TMGI.

In an embodiment, the network identifier list includes at least one of:
a PLMN identifier list; or
an NPN identifier list.

In an embodiment, the first message further includes:
network identifier information.

In an embodiment, the network identifier information includes at least one of:
a PLMN identifier; or
an NPN identifier.

In an embodiment, the NPN identifier includes at least one of:
a network identifier (NID);
a closed access group (CAG) identifier;
a stand-alone non-public network (SNPN) identifier; or
a public network integrated NPN (PIN-NPN) identifier.

In an embodiment, the NPN identifier includes an NID and/or a CAG identifier, and the NPN identifier is associated with the first message including the TMGI.

In an embodiment, the first message includes a message including a multicast broadcast service interest indication (MII).

In an embodiment, the TMGI is an existing TMGI, or the TMGI is a TMGI newly defined by a protocol.

In an embodiment, the first node is a terminal, and the second node is a network side node; or
the first node is a network side node, and the second node is a terminal; or
the first node is a network side node, and the second node is a network side node.

According to a second aspect of embodiments of the present disclosure, a method for transmitting information is provided, performed by a second node, including:
receiving a first message including a temporary mobile group identity (TMGI) sent by a first node; and
determining, according to the first message, non-public network (NPN) identifier information associated with the TMGI.

In an embodiment, the first message further includes:
a network index, in which the network index is used to determine, in a network identifier list, the NPN identifier information associated with the TMGI.

In an embodiment, the network index includes at least one of:
an NPN index; or
a public land mobile network (PLMN) index.

In an embodiment, the method further includes:
receiving the network identifier list sent by the first node.

In an embodiment, the network identifier list includes at least one of:
a PLMN identifier list; or
an NPN identifier list.

In an embodiment, determining, according to the first message, the NPN identifier information associated with the TMGI includes:
determining, in the network identifier list, a network identifier corresponding to the network index as the NPN identifier information associated with the TMGI.

In an embodiment, the first message further includes:
network identifier information.

In an embodiment, the network identifier information includes at least one of:
a PLMN identifier; or
an NPN identifier.

In an embodiment, the NPN identifier includes at least one of:
a network identifier (NID);
a closed access group (CAG) identifier;
a stand-alone non-public network (SNPN) identifier; or
a public network integrated NPN (PIN-NPN) identifier.

In an embodiment, the NPN identifier includes an NID and/or a CAG identifier, and the NPN identifier is associated with the first message including the TMGI.

In an embodiment, determining, according to the first message, the NPN identifier information associated with the TMGI includes:
determining the network identifier information included in the first message as the NPN identifier information associated with the TMGI.

In an embodiment, the first message includes a message including a multicast broadcast service interest indication (MII).

In an embodiment, the TMGI is an existing TMGI, or the TMGI is a TMGI newly defined by a protocol.

In an embodiment, the first node is a terminal, and the second node is a network side node; or
the first node is a network side node, and the second node is a terminal; or
the first node is a network side node, and the second node is a network side node.

According to a third aspect of embodiments of the present disclosure, an apparatus for transmitting information is provided, applied to a first node, including:
a sending module configured to send a first message including a temporary mobile group identity (TMGI) to a second node, in which the first message is used by the second node to determine non-public network (NPN) identifier information associated with the TMGI.

According to a fourth aspect of embodiments of the present disclosure, an apparatus for transmitting information is provided, applied to a second node, including:
a receiving module configured to receive a first message including a temporary mobile group identity (TMGI) sent by a first node; and
a determining module configured to determine, according to the first message, non-public network (NPN) identifier information associated with the TMGI.

According to a fifth aspect of embodiments of the present disclosure, a processor-readable storage medium having a computer program stored thereon is provided, in which the computer program is configured to perform any one of the methods for transmitting information described above on the first node.

According to a sixth aspect of embodiments of the present disclosure, a processor-readable storage medium having a computer program stored thereon is provided, in which the computer program is configured to perform any one of the methods for transmitting information described above on the second node.

According to a seventh aspect of embodiments of the present disclosure, a device for transmitting information is provided, including:
a processor; and
a memory for storing processor-executable instructions;
in which the processor is configured to perform any one of the methods for transmitting information described above on the first node.

According to an eighth aspect of embodiments of the present disclosure, a device for transmitting information is provided, including:
a processor; and
a memory for storing processor-executable instructions;
in which the processor is configured to perform any one of the methods for transmitting information described above on the second node.

The technical solutions provided by embodiments of the present disclosure may include the following advantageous effects.

In embodiments of the present disclosure, the first node may send the first message including the TMGI to the second node, and the second node may determine, according to the first message, the NPN identifier information associated with the TMGI, thereby ensuring that the NPN identifier information determined between the first node and the second node is the same, and improving reliability of using the TMGI.

It is to be understood that both the foregoing general description and the following detailed description are illustrative and explanatory only and are not restrictive of embodiments of the present disclosure.

### BRIEF DESCRIPTION OF THE DRAWINGS

The drawings, which are incorporated in and constitute a part of the present disclosure, illustrate embodiments consistent with the present disclosure and, together with the description, serve to explain the principles of the present disclosure.
FIG. 1 is a schematic flowchart illustrating a method for transmitting information according to an illustrative embodiment.
FIG. 2 is a schematic flowchart illustrating another method for transmitting information according to an illustrative embodiment.
FIG. 3 is a schematic flowchart illustrating another method for transmitting information according to an illustrative embodiment.
FIG. 4 is a schematic flowchart illustrating another method for transmitting information according to an illustrative embodiment.
FIG. 5 is a block diagram illustrating an apparatus for transmitting information according to an illustrative embodiment.
FIG. 6 is a block diagram illustrating another apparatus for transmitting information according to an illustrative embodiment.
FIG. 7 is a schematic structural diagram illustrating a device for transmitting information according to an illustrative embodiment of the present disclosure.
FIG. 8 is a schematic structural diagram illustrating another device for transmitting information according to an illustrative embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise indicated. The implementations set forth in the following description of illustrative embodiments do not represent all implementations consistent with the present disclosure. Instead, they are merely examples of devices and methods consistent with aspects related to the present disclosure as recited in the appended claims.

Terms used herein in the present disclosure are only for the purpose of describing specific embodiments, but should not be construed to limit the present disclosure. As used in the present disclosure and the appended claims, "a/an", "said" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the present disclosure for describing various information, these information should not be limited by these terms. These terms are only used for distinguishing information of the same type from each other. For example, first information may also be referred to as second information, and similarly, the second information may also be referred to as the first information, without departing from the scope of the present disclosure. As used herein, the term "if" may be construed to mean "when" or "upon" or "in response to determining" depending on the context.

Before introducing a method for transmitting information provided by the present disclosure, the relevant contents of a temporary mobile group identity (TMGI) and a non-public network (NPN) will be introduced.

### Regarding the NPN:

The NPN was introduced in Release 16 (R16). This network is used for non-public purposes and may be implemented in the following deployment methods:
a stand-alone non-public network (SNPN) that does not rely on the network function provided by a public land mobile network (PLMN); and
a public network integrated (PNI) NPN that relies on the network function provided by the PLMN.

The only one of the various implementations of the PNI that is visible to an access stratum (AS) and solved by an AS standard is to use a cell access group (CAG).

In R16, an NPN identifier (ID), that is, the SNPNs and the PNI-NPNs, are introduced in a system information block1 (SIB1), in which the SNPN may be identified by a PLMN ID and a network identifier (NID), and the PNI-NPN may be jointly identified by the PLMN ID and a CAG ID to indicate whether a certain cell is an NPN cell. Moreover, a tracking area code (TAC), a radio access network (RAN) area code (RANAC) and a cell ID in the SIB1 are indicated according to a granularity of each NPN (each SNPN or each PNI-NPN).

### Regarding the SNPN:

The SNPN does not rely on the network function provided by the PLMN and is jointly identified by the PLMN ID and the NID. Users who subscribe to a certain SNPN service will be configured with corresponding subscriber identifier (SUPI) and subscription information, which are stored on a terminal side and a core network (CN) device side.

An SNPN-capable terminal supports an SNPN access mode. In a case where a terminal is set to the SNPN access mode, the terminal only selects and registers the SNPN. In a case where the terminal is not set to the SNPN access mode, the terminal will perform a normal PLMN selection procedure. A configuration of the SNPN access mode (activation, deactivation, etc.) is implemented by the terminal.

In processes of initial access and cell reselection, a next generation radio access network node (NG-RAN node) needs to broadcast its own supported NID and corresponding PLMN ID information (each NG-RAN node broadcasts up to 12 NIDs). Users who have configured the SNPN access mode may select accessible SNPN cells according to their own subscription information, and a core network may also authenticate an identity of users according to the subscription information of users.

Since the SNPN does not rely on the network function of the PLMN, handover between the SNPN and PLMN networks is not supported.

Regarding an emergency operation, an earthquake and tsunami warning system (ETWS), a commercial mobile alert system (CMAS) and the like, they are not supported before Release 17 (R17). R17 implements support for this function. Specifically, an IP multimedia subsystem emergency call (IMS Emergency call) support indication for per SNPN is provided to the terminal. In a normal service state, the indication is provided in the same manner as in the PLMN. The indication is provided via a broadcast indication (imsEmergencySupportForSNPN) for per SNPN of the NG-RAN in a case of being in a limited service state and for emergency services other than a call on the IMS. Moreover, the indication may be arranged to "support" in a case where any authentication management function (AMF) in the SNPN supports an IMS emergency service bearer. The protocol supports a dual connection of new radio-new radio (NR-NR) within a single SNPN.

### Regarding the PNI-NPN:

The NPN service is provided via a PLMN network under which the terminal has a subscription to the PLMN network. The CAG may be used for access control. The CAG represents a group of subscribed terminals that may access one or more CAG cells. One CAG may be determined by the PLMN ID and the CAG ID. The relationship between the terminal and the CAG is similar to that of the subscription, and only the subscribed terminal is allowed to access a cell with the CAG enabled. In a case where the terminal subscribes to the CAG, two pieces of information are configured in the subscription information, one is an allowed CAG list, which stores IDs of all CAG cells that a current terminal may access, and the other is a CAG-only indication whether the terminal may access the network only through the CAG cell, and the terminal configured with the indication may access the network only through the CAG cell.

In processes of initial access and cell reselection, an NG-RAN node needs to broadcast its own supported CAG ID and corresponding PLMN ID information (each NG-RAN node broadcasts up to 12 CAG IDs). CAG users who are not configured with the CAG-only indication may select accessible CAG cells according to their allowed CAG list, or they may select subscribed public PLMN cells to access the network. The CAG users configured with the CAG-only indication may only select the accessible CAG cell to access the network according to their allowed CAG list. The core network may authenticate the identity of the user according to the subscription information of the terminal.

Since the PNI-NPN relies on the network function of the PLMN, handover between the PNI-NPN and the PLMN networks is supported for users who is not configured the CAG-only indication. The handover from the CAG cell to the PLMN cell requires a base station or the core network to confirm whether the terminal is configured with the CAG-only indication. Handover from the PLMN cell to the CAG cell requires the base station or the core network to determine that the CAG ID of a target base station is in the allowed CAG list of the user.

Currently, TMGI = PLMN ID + unique Service ID in PLMN to uniquely identify a multicast broadcast service (MBS) session.

The PLMN identifier may be indicated by a PLMN ID list implicitly indexed into the SIB1, or may be indicated by an explicitly PLMN ID value.

In an RAN sharing scenario, directly multiplexing a PLMN index or a PLMN value in an existing TMGI to determine NPN identifier information may lead to the following problems:
Problem 1. In the RAN sharing scenario, two types of network identifier lists (for example, a PLMN identifier list and an NPN identifier list) are existed in the SIB1. In a case where the PLMN index in the existing TMGI is multiplexed, the protocol needs to clearly define the network identifier list corresponding to the PLMN index to determine the NPN identifier information. Otherwise, the terminal side and the network side may have different understandings of the network identifier list corresponding to the PLMN index, resulting in incorrect use of the TMGI.
Problem 2. In a case of performing interaction between the base stations (for example, in a handover process between the base stations), the network identifier lists in the SIB1 of different base stations are different, which will lead to different understandings of the PLMN index, that is, the network identifiers corresponding to the PLMN index are different.
Problem 3. In a case where the PLMN value in the existing TMGI is multiplexed to determine the NPN identifier information, the PLMN identifier corresponding to the NPN is the same as the PLMN identifier corresponding to the PLMN in the RAN sharing scenario, and the TMGI identifier may not be uniquely determined, resulting in inconsistent understanding of the TMGI of an MBS session identifier between the terminal and the base station or between the base station and the base station.

In order to solve the above technical problems, the present disclosure provides a method and an apparatus for transmitting information, and a storage medium, thereby ensuring that NPN identifier information determined between a first node and a second node is the same, and improving reliability of using the TMGI.

In the following, the method for transmitting information provided by the present disclosure will first be described from a first node side.

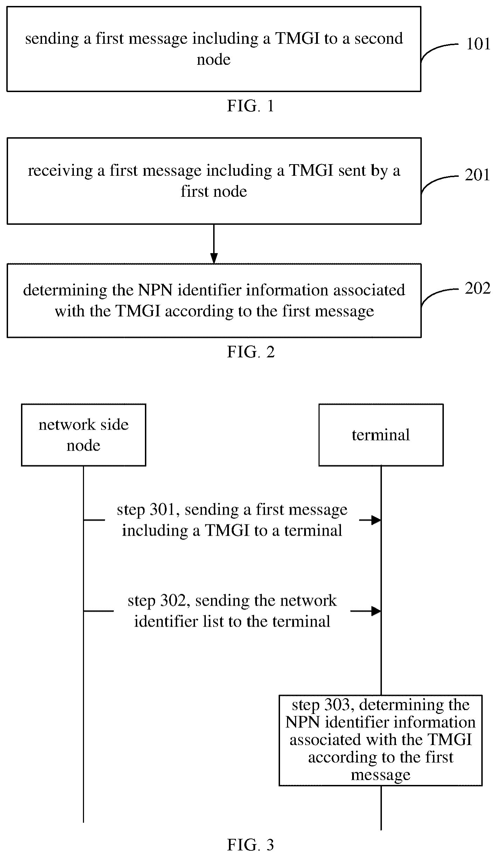

Embodiments of the present disclosure provide a method for transmitting information. Referring to FIG. 1, FIG. 1 is a schematic flowchart illustrating a method for transmitting information according to an illustrative embodiment, which may be performed by a first node, the first node including but not limited to a terminal and a network side node, in which the network side node includes but not limited to a base station, a core network device and the like. The method may include the following steps:
In step 101, a first message including a TMGI is sent to a second node.

In embodiments of the present disclosure, the first message is used by the second node to determine NPN identifier information associated with the TMGI.

In an embodiment, the first message further includes a network index. The network index is used to determine, in a network identifier list, the NPN identifier information associated with the TMGI.

The network index includes but is not limited to at least one of: an NPN index; or a PLMN index.

In an example, the first node may send the network identifier list to the second node, to enable the second node determine, according to the network index and the network identifier list, the NPN identifier information associated with the TMGI.

For example, the first node may send the network identifier list to the second node via a system message, such as an SIB1.

For example, the network identifier list includes but is not limited to at least one of: a PLMN identifier list; or an NPN identifier list.

The network identifier list may further include a cascade list obtained by cascading the PLMN identifier list and the NPN identifier list. Specifically, in the cascade list, the PLMN identifier list comes first and the NPN identifier list comes second.

For example, the network index includes an NPN index, and the network identifier list sent by the first node to the second node includes the PLMN identifier list and the NPN identifier list. Therefore, the second node may determine identifier information corresponding to the NPN index in the PLMN identifier list and the NPN identifier list, and determine the identifier information as the NPN identifier information associated with the TMGI.

For another example, the network index includes the NPN index, and the network identifier list sent by the first node to the second node includes the cascade list obtained by cascading the PLMN identifier list and the NPN identifier list. Specifically, in the cascade list, the PLMN identifier list comes first and the NPN identifier list comes second. Therefore, the second node may determine identifier information corresponding to the NPN index in the cascade list as the NPN identifier information associated with the TMGI.

For another example, the network index includes the NPN index, and the network identifier list sent by the first node to the second node includes the NPN identifier list. Therefore, the second node may determine identifier information corresponding to the NPN index in the NPN identifier list as the NPN identifier information associated with the TMGI.

For another example, the network index includes the PLMN index, i.e. multiplexing an existing PLMN index, and the network identifier list sent by the first node to the second node includes the PLMN identifier list and the NPN identifier list. Therefore, the second node may determine identifier information corresponding to the PLMN index in the PLMN identifier list and the NPN identifier list as the NPN identifier information associated with the TMGI.

For another example, the network index includes the PLMN index, i.e. multiplexing an existing PLMN index, and the network identifier list sent by the first node to the second node includes the cascade list obtained by cascading the PLMN identifier list and the NPN identifier list. Specifically, in the cascade list, the PLMN identifier list comes first and the NPN identifier list comes second. Therefore, the second node may determine identifier information corresponding to the PLMN index in the cascade list as the NPN identifier information associated with the TMGI.

For another example, the network index includes the PLMN index, i.e. multiplexing an existing PLMN index, and the network identifier list sent by the first node to the second node includes the NPN identifier list. Therefore, the second node may determine identifier information corresponding to the PLMN index in the NPN identifier list as the NPN identifier information associated with the TMGI.

For another example, the network index includes the PLMN index and the NPN index, and the network identifier list sent by the first node to the second node includes the PLMN identifier list and the NPN identifier list. Therefore, the second node may determine identifier information corresponding to the NPN index in the PLMN identifier list and the NPN identifier list as the NPN identifier information associated with the TMGI.

For another example, the network index includes the PLMN index and the NPN index, and the network identifier list sent by the first node to the second node includes the cascade list obtained by cascading the PLMN identifier list and the NPN identifier list. Specifically, in the cascade list, the PLMN identifier list comes first and the NPN identifier list comes second. Therefore, the second node may determine the identifier information corresponding to the NPN index in the cascade list as the NPN identifier information associated with the TMGI.

For another example, the network index includes the PLMN index and the NPN index, and the network identifier list sent by the first node to the second node includes the NPN identifier list. Therefore, the second node may determine the identifier information corresponding to the NPN index in the NPN identifier list as the NPN identifier information associated with the TMGI. The above is only an exemplary description, and a solution in which the network index is included in the first message such that the second node, according to the first message, determines the NPN identifier information associated with the TMGI should all fall within the scope of the present disclosure.

In an example, in a case where the first message further includes the network index, the TMGI may be an existing TMGI, that is, the TMGI may be an existing TMGI in a protocol that does not include an extension bit. In an embodiment, the TMGI may be a TMGI newly defined by the protocol. For example, the protocol newly defines a TMGI, and the newly defined TMGI may include the extension bit or may not include the extension bit, which is not limited by the present disclosure.

In an example, in a case where the first message further includes the network index, the first message may be a message including an MBS interest indication (MII), which is not limited in the present disclosure. The MII may be included in the first message as a field or a container.

For example, the first message may be a handover preparation message including the MII. In an example, the first node may be the terminal, and the second node may be the network side node, or the first node may be the network side device, and the second node may be the terminal. Accordingly, the first message may further include the network index.

The first message may include the network index according to the implementation of the network side node, and the second node may determine the NPN identifier information associated with the TMGI according to the network index and the network identifier list.

For example, the network side node may send the network identifier list to the terminal, and the terminal determines the NPN identifier information associated with the TMGI according to the network index and the network identifier list.

In another embodiment, the first message may further include the network identifier information. Correspondingly, the second node determines the NPN identifier information associated with the TMGI according to the network identifier information.

In an example, the first message may include a value of the network identifier, and the second node may determine the value as the NPN identifier information associated with the TMGI.

In an example, the network identifier information includes but is not limited to at least one of: a PLMN identifier; or an NPN identifier.

The NPN identifier includes but is not limited to at least one of: a network identifier (NID); a closed access group (CAG) identifier; a stand-alone non-public network (SNPN) identifier; or a public network integrated NPN (PIN-NPN) identifier.

The SNPN identifier may be jointly determined by the PLMN identifier and the NID, and the PIN-NPN identifier may be jointly determined by the PLMN identifier and the CAG identifier.

In an example, the TMGI may include the PLMN identifier.

In an example, the NPN identifier may be included in a first information element (IE) in the first message. The first IE may be any one of the IEs including the extension bits in the first message.

In an example, the NPN identifier includes the NID and/or the CAG identifier. Since the SNPN identifier or the PNI-NPN identifier further needs to be determined by the PLMN identifier, the NPN identifier may be associated with the first message including the TMGI. The PLMN identifier is included in the TMGI.

In an example, in a case where the first message further includes the network identifier information, the TMGI may be an existing TMGI. That is, the TMGI may be an existing TMGI in a protocol that does not include the extension bit. In an embodiment, the TMGI may be a TMGI newly defined by the protocol. For example, the protocol newly defines a TMGI, and the newly defined TMGI may include the extension bit or may not include the extension bit, which is not limited by the present disclosure.

In an example, in a case where the first message further includes the network identifier information, the first message may be a message including the MII. For example, the first message may be the handover preparation message, or other messages including the MII, which is not limited by the present disclosure.

In an example, the first node may be the terminal and the second node may be the network side node, or the first node may be the network side device and the second node may be the terminal. Correspondingly, the first message may further include the network identifier information.

In an embodiment, the first node may be the network side node and the second node may be the network side node. Correspondingly, the first message may further include the network identifier information.

The first node and the second node may be different base stations or different core network nodes, which is not limited by the present disclosure.

For example, the network identifier information includes the PLMN identifier, and the second node determines the NPN identifier information including the PLMN identifier in information of a current cell associated with the TMGI, thereby obtaining the NPN identifier information associated with the TMGI. Further, the network identifier information is included in the TMGI.

For another example, the network identifier information includes the NPN identifier, and the second node determines the NPN identifier as the NPN identifier information associated with the TMGI. Further, the network identifier information may be included in the TMGI, and the TMGI may be the newly defined TMGI. The NPN identifier may include the SNPN identifier (PLMN identifier + NID) and/or a PNI-NPN identifier (PLMN identifier + CAG identifier).

For another example, the network identifier information includes the PLMN identifier and the NPN identifier, and the second node determines the NPN identifier information associated with the TMGI according to the network identifier information. The NPN identifier includes the NID and/or the CAG identifier. The second node determines the SNPN identifier according to the PLMN identifier and the NID, and determines the PNI-NPN identifier according to the PLMN identifier and the CAG identifier.

Further, the PLMN identifier is included in the TMGI. The NPN identifier is included in the first IE in the first message, and the first IE is outside the TMGI. In an embodiment, the NPN identifier is associated with the first message including the TMGI.

For another example, the first message is the message including the MII, and the first message includes the network identifier information. In a case where the first node is the terminal and the second node is the network side node, or the first node is the network side node and the second node is the terminal, the network identifier information may be sent by a terminal side in the MII, or may be included in the first IE in the message including the MII. The first IE is any one of the IEs that includes the extension bit in the message including the MII. For another example, the first message is the message including the MII, and the first message includes the network identifier information. In a case where the first node is the network side node and the second node is the network side node, the network identifier information may be sent in the MII, or may be included in the first IE in the message including the MII. The first IE is any one of the IEs that includes the extension bit in the message including the MII.

The NPN identifier information associated with the TMGI included in the message including the MII may be associated with an entry in an MBS service list.

For example, the message including the MII includes an entry index of the MBS service list, such as mbs-Service-Index, and the NPN identifier information, and the entry index of the MBS service list indicates a TMGI of an MBS service in which the NPN identifier included in the message including the MII applies. Further, after being combined with the PLMN identifier included in the TMGI in the entry of the MBS service list corresponding to the entry index of the MBS service list, the NPN identifier information associated with the TMGI is jointly indicated. For example, in a case where the first node and the second node are both the network side nodes, it may be ensured that the first message includes the network identifier information through the implementation of the network, and the second node determines the NPN identifier information associated with the TMGI according to the network identifier information.

In an example, in a case where the first message interacts between the terminal and the network side node, it may be ensured that the network identifier information is sent through the implementation of a protocol agreement or the network side node, in which the network identifier information is used to determine the NPN identifier information associated with the TMGI. In an embodiment, the terminal may send the network index to the network side node, and the network side node converts the network index into the network identifier information, in which the network index is used to determine the NPN identifier information associated with the TMGI. In this way, it may be ensured that the network side node includes the network identifier information in a case of sending it to other network side nodes subsequently.

In an example, the first message may be the message including the MII. In a case where the message including the MII is sent by the terminal to the network side node or sent by the network side node to the terminal, the NPN identifier information indicated by the extension bit in the message including the MII may be ignored.

In an example, the first message may be the message including the MII, e.g., a handover preparation message including the MII, and the NPN identifier information associated with the TMGI is indicated by the extension bit in the first message.

For example, the NPN identifier information may be indicated on the extension bit included in the first IE of the first message. The first IE is any one of the IEs that includes the extension bit in the first message.

In an example, the first message may be the message including the MII, e.g., the handover preparation message, and the extension bit is added to the first message to indicate the NPN identifier information associated with the TMGI.

The NPN identifier information associated with the TMGI included in the first message may be associated with the entry in the MBS service list.

For example, the message including the MII includes the entry index of the MBS service list, such as mbs-Service-Index, and the NPN identifier information, and the entry index of the MBS service list indicates the TMGI of the MBS service in which the NPN identifier included in the message including the MII applies. Further, after being combined with the PLMN identifier included in the TMGI in the entry of the MBS service list corresponding to the entry index of the MBS service list, the NPN identifier information associated with the TMGI is jointly indicated.

For example, the message including the MII is the handover preparation message, and the handover preparation message includes the entry index of the MBS service list, such as mbs-Service-Index, and the NPN identifier information, and the entry index of the MBS service list indicates the TMGI of the MBS service in which the handover preparation message including the MII applies. Further, after being combined with the PLMN identifier included in the TMGI in the entry of the MBS service list corresponding to the entry index of the MBS service list, the NPN identifier information associated with the TMGI is jointly indicated.

In embodiments of the present disclosure, it should further be noted that in a case where the first node and the second node are both network side nodes, the first message includes the network identifier information. In a case where one of the first node and the second node is the terminal and the other is the network side node, the first message may include the network identifier information or may include the network index, which is not limited by the present disclosure.

In the above embodiments, the first node may send the first message including the TMGI to the second node, and the second node may determine, according to the first message, the NPN identifier information associated with the TMGI, thereby ensuring that the NPN identifier information determined between the first node and the second node is the same, and improving reliability of using the TMGI.

In the following, the method for transmitting information provided by the present disclosure will be described from a second node side.

Embodiments of the present disclosure provide a method for transmitting information. Referring to FIG. 2, FIG. 2 is a schematic flowchart illustrating a method for transmitting information according to an illustrative embodiment, which may be performed by a second node, the second node including but not limited to a terminal and a network side node, in which the network side node includes but not limited to a base station, a core network device and the like. The method may include the following steps:
In step 201, a first message including a TMGI sent by a first node is received.

In an embodiment, the first message further includes a network index. The network index is used to determine, in a network identifier list, NPN identifier information associated with the TMGI.

The network index includes but is not limited to at least one of: an NPN index; or a PLMN index.

In an example, the second node may receive the network identifier list sent by the first node. Further, the second node determines, according to the network index and the network identifier list, the NPN identifier information associated with the TMGI.

For example, the second node may receive the network identifier list sent by the first node via a system message, such as an SIB1.

For example, the network identifier list includes but is not limited to at least one of: a PLMN identifier list; or an NPN identifier list.

The network identifier list may further include a cascade list obtained by cascading the PLMN identifier list and the NPN identifier list. Specifically, in the cascade list, the PLMN identifier list comes first and the NPN identifier list comes second.

In an example, in a case where the first message further includes the network index, the TMGI may be an existing TMGI. That is, the TMGI may be an existing TMGI in a protocol that does not include an extension bit. In an embodiment, the TMGI may be a TMGI newly defined by the protocol. For example, the protocol newly defines a TMGI, and the newly defined TMGI may include the extension bit or may not include the extension bit, which is not limited by the present disclosure.

In an example, in a case where the first message further includes the network index, the first message may be a message including an MII, which is not limited in the present disclosure.

For example, the first message may be a handover preparation message including the MII.

In an example, the first node may be the terminal, and the second node may be the network side node, or the first node may be the network side device, and the second node may be the terminal. Accordingly, the first message may further include the network index.

The first message may include the network index according to the implementation of the network side node, and the second node may determine the NPN identifier information associated with the TMGI according to the network index and the network identifier list.

For example, the network side node may send the network identifier list to the terminal, and the terminal determines the NPN identifier information associated with the TMGI according to the network index and the network identifier list.

In another embodiment, the first message may further include the network identifier information.

In an example, the first message may include a value of a network identifier, and the second node may determine the value as the NPN identifier information associated with the TMGI.

In an example, the network identifier information includes but is not limited to at least one of: a PLMN identifier; or an NPN identifier.

The NPN identifier includes but is not limited to at least one of: an NID; a CAG identifier; an SNPN identifier; or a PIN-NPN identifier.

The SNPN identifier may be jointly determined by the PLMN identifier and the NID, and the PIN-NPN identifier may be jointly determined by the PLMN identifier and the CAG identifier.

In an example, the TMGI may include the PLMN identifier.

In an example, the NPN identifier may be included in a first IE in the first message. The first IE may be any one of the IEs including the extension bit in the first message.

In an example, the NPN identifier includes the NID and/or the CAG identifier. Since the SNPN identifier or the PNI-NPN identifier further needs to be determined by the PLMN identifier, the NPN identifier may be associated with the first message including the TMGI. The PLMN identifier is included in the TMGI.

In an example, in a case where the first message further includes the network identifier information, the TMGI may be an existing TMGI. That is, the TMGI may be an existing TMGI in a protocol that does not include the extension bit. In an embodiment, the TMGI may be a TMGI newly defined by the protocol. For example, the protocol newly defines a TMGI, and the newly defined TMGI may include the extension bit or may not include the extension bit, which is not limited by the present disclosure.

In an example, in a case where the first message further includes the network identifier information, the first message may be a message including the MII. For example, the first message may be the handover preparation message, or other messages including the MII, which is not limited by the present disclosure.

In an example, the first node may be the terminal and the second node may be the network side node, or the first node may be the network side device and the second node may be the terminal. Correspondingly, the first message may further include the network identifier information.

In an embodiment, the first node may be the network side node and the second node may be the network side node. Correspondingly, the first message may further include the network identifier information.

The first node and the second node may be different base stations or different core network nodes, which is not limited by the present disclosure.

In step 202, the NPN identifier information associated with the TMGI is determined according to the first message.

In an embodiment, the first message further includes the network index. The second node may determine the NPN identifier information associated with the TMGI according to the network index and the network identifier list.

Specifically, the second node may determine the network identifier corresponding to the network index as the NPN identifier information associated with the TMGI in the network identifier list.

For example, the network index includes the NPN index, and the network identifier list sent by the first node to the second node includes the PLMN identifier list and the NPN identifier list. Therefore, the second node may determine identifier information corresponding to the NPN index in the PLMN identifier list and the NPN identifier list, and determine the identifier information as the NPN identifier information associated with the TMGI.

For another example, the network index includes the NPN index, and the network identifier list sent by the first node to the second node includes the cascade list obtained by cascading the PLMN identifier list and the NPN identifier list. Specifically, in the cascade list, the PLMN identifier list comes first and the NPN identifier list comes second. Therefore, the second node may determine identifier information corresponding to the NPN index in the cascade list as the NPN identifier information associated with the TMGI.

For another example, the network index includes the NPN index, and the network identifier list sent by the first node to the second node includes the NPN identifier list. Therefore, the second node may determine identifier information corresponding to the NPN index in the NPN identifier list as the NPN identifier information associated with the TMGI.

For another example, the network index includes the PLMN index, i.e. multiplexing an existing PLMN index, and the network identifier list sent by the first node to the second node includes the PLMN identifier list and the NPN identifier list. Therefore, the second node may determine identifier information corresponding to the PLMN index in the PLMN identifier list and the NPN identifier list as the NPN identifier information associated with the TMGI.

For another example, the network index includes the PLMN index, i.e. multiplexing an existing PLMN index, and the network identifier list sent by the first node to the second node includes the cascade list obtained by cascading the PLMN identifier list and the NPN identifier list. Specifically, in the cascade list, the PLMN identifier list comes first and the NPN identifier list comes second. Therefore, the second node may determine identifier information corresponding to the PLMN index in the cascade list as the NPN identifier information associated with the TMGI.

For another example, the network index includes the PLMN index, i.e. multiplexing an existing PLMN index, and the network identifier list sent by the first node to the second node includes the NPN identifier list. Therefore, the second node may determine identifier information corresponding to the PLMN index in the NPN identifier list as the NPN identifier information associated with the TMGI.

For another example, the network index includes the PLMN index and the NPN index, and the network identifier list sent by the first node to the second node includes the PLMN identifier list and the NPN identifier list. Therefore, the second node may determine the identifier information corresponding to the NPN index in the PLMN identifier list and the NPN identifier list as the NPN identifier information associated with the TMGI.

For another example, the network index includes the PLMN index and the NPN index, and the network identifier list sent by the first node to the second node includes the cascade list obtained by cascading the PLMN identifier list and the NPN identifier list. Specifically, in the cascade list, the PLMN identifier list comes first and the NPN identifier list comes second. Therefore, the second node may determine the identifier information corresponding to the NPN index in the cascade list as the NPN identifier information associated with the TMGI.

For another example, the network index includes the PLMN index and the NPN index, and the network identifier list sent by the first node to the second node includes the NPN identifier list. Therefore, the second node may determine the identifier information corresponding to the NPN index in the NPN identifier list as the NPN identifier information associated with the TMGI.

The above is only an exemplary description, and a solution in which the network index is included in the first message such that the second node, according to the first message, determines the NPN identifier information associated with the TMGI should all fall within the scope of the present disclosure.

In another embodiment, the first message further includes the network identifier, and the second node may determine the NPN identifier information associated with the TMGI according to the network identifier information.

Specifically, the second node may determine the network identifier information included in the first message as the NPN identifier information associated with the TMGI.

For example, the network identifier information includes the PLMN identifier, and the second node determines the NPN identifier information including the PLMN identifier in information of a current cell associated with the TMGI, thereby obtaining the NPN identifier information associated with the TMGI. Further, the network identifier information is included in the TMGI.

For another example, the network identifier information includes the NPN identifier, and the second node determines the NPN identifier as the NPN identifier information associated with the TMGI. Further, the network identifier information may be included in the TMGI, and the TMGI may be a newly defined TMGI. The NPN identifier may include the SNPN identifier (PLMN identifier + NID) and/or a PNI-NPN identifier (PLMN identifier + CAG identifier).

For another example, the network identifier information includes the PLMN identifier and the NPN identifier, and the second node determines the NPN identifier information associated with the TMGI according to the network identifier information. The NPN identifier includes the NID and/or the CAG identifier. The second node determines the SNPN identifier according to the PLMN identifier and the NID, and determines the PNI-NPN identifier according to the PLMN identifier and the CAG identifier.

Further, the PLMN identifier is included in the TMGI. The NPN identifier is included in the first IE in the first message, and the first IE is outside the TMGI. In an embodiment, the NPN identifier is associated with the first message including the TMGI.

For another example, the first message is the message including the MII, and the first message includes the network identifier information. In a case where the first node is the terminal and the second node is the network side node, or the first node is the network side node and the second node is the terminal, the terminal side may send the network identifier information in the message including the MII.

For another example, the first message is the message including the MII, and the first message includes the network identifier information. In a case where the first node is the network side node and the second node is the network side node, the network identifier information may be included in the first IE in the message including the MII. The first IE is any one of the IEs that includes the extension bit in the message including the MII.

The NPN identifier information associated with the TMGI included in the message including the MII may be associated with an entry in an MBS service list.

For example, the message including the MII includes an entry index of the MBS service list, such as mbs-Service-Index, and the NPN identifier information. The entry index of the MBS service list indicates a TMGI in an MBS service in which the NPN identifier included in the message including the MII applies. Further, after being combined with the PLMN identifier included in the TMGI in the entry of the MBS service list corresponding to the entry index of the MBS service list, the NPN identifier information associated with the TMGI is jointly indicated.

For example, in a case where the first node and the second node are both the network side nodes, it may be ensured that the first message includes the network identifier information through the implementation of the network, and the second node determines the NPN identifier information associated with the TMGI according to the network identifier information.

In an example, in a case where the first message interacts between the terminal and the network side node, it may be ensured that the network identifier information is sent through the implementation of a protocol agreement or the network side node, in which the network identifier information is used to determine the NPN identifier information associated with the TMGI. In an embodiment, the terminal may send the network index to the network side node, and the network side node converts the network index into the network identifier information, in which the network index is used to determine the NPN identifier information associated with the TMGI. In this way, it may be ensured that the network side node includes the network identifier information in a case of sending it to other network side nodes subsequently.

In an example, the first message may be the message including the MII. In a case where the message including the MII is sent by the terminal to the network side node or sent by the network side node to the terminal, the NPN identifier information indicated by the extension bit in the message including the MII may be ignored.

In an example, the first message may be the message including the MII, e.g., a handover preparation message including the MII, and the NPN identifier information associated with the TMGI is indicated by the extension bit in the first message.

For example, the NPN identifier information may be indicated on the extension bit included in the first IE of the first message. The first IE is any one of the IEs that includes the extension bit in the first message.

In an example, the first message may be the message including the MII, and the extension bit is added to the first message to indicate the NPN identifier information associated with the TMGI.

The NPN identifier information associated with the TMGI included in the first message may be associated with the entry in the MBS service list.

For example, the message including the MII includes the entry index of the MBS service list, such as mbs-Service-Index, and the NPN identifier information. The entry index of the MBS service list indicates the TMGI in the MBS service in which the NPN identifier included in the message including the MII applies. Further, after being combined with the PLMN identifier included in the TMGI in the entry of the MBS service list corresponding to the entry index of the MBS service list, the NPN identifier information associated with the TMGI is jointly indicated.

For example, the message including the MII is the handover preparation message, and the handover preparation message includes the entry index of the MBS service list, such as mbs-Service-Index, and the NPN identifier information. The entry index of the MBS service list indicates the TMGI in the MBS service in which the handover preparation message including the MII applies. Further, after being combined with the PLMN identifier included in the TMGI in the entry of the MBS service list corresponding to the entry index of the MBS service list, the NPN identifier information associated with the TMGI is jointly indicated.

In embodiments of the present disclosure, it should further be noted that in a case where the first node and the second node are both network side nodes, the first message includes the network identifier information. In a case where one of the first node and the second node is the terminal and the other is the network side node, the first message may include the network identifier information or may include the network index, which is not limited by the present disclosure.

In the above embodiments, the second node may receive the first message including the TMGI sent by the first node, and the second node may determine, according to the first message, the NPN identifier information associated with the TMGI, thereby ensuring that the NPN identifier information determined between the first node and the second node is the same, and improving reliability of using the TMGI.

In some embodiments, the above-described solution for transmitting information provided by the present disclosure is applicable to a Ran sharing scenario.

Ran sharing means that one base station is connected to core networks of two or more operators at the same time, and a resource of the base station is shared by two or more operators.

In an example, multiple operators only share an RAN, and the core network devices corresponding to different operators are independent of each other.

In another example, in addition to sharing the RAN, the multiple operators may further share some core network elements, such as a mobility management entity (MME) or the like.

Regarding the previous problem 1, in the RAN sharing scenario, two types of network identifier lists (for example, the PLMN identifier list and the NPN identifier list) are existed in the SIB1. In a case where the PLMN index in the existing TMGI is multiplexed, the protocol needs to clearly define the network identifier list corresponding to the PLMN index to determine the NPN identifier information. Otherwise, the terminal side and the network side may have different understandings of the network identifier list corresponding to the PLMN index, resulting in incorrect use of the TMGI.

In order to solve this problem, in embodiments of the present disclosure, the base station as the first node may send the network identifier list to the terminal as the second node, and the network identifier list includes, but is not limited to, at least one of the PLMN identifier list and the NPN identifier list.

Further, the base station may send the first message including the TMGI to the terminal, and the first message further includes the network index, in which the network index is used to determine the NPN identifier information associated with the TMGI in the network identifier list. The terminal may determine the NPN identifier information associated with the TMGI according to the network index and the network identifier list. Further, a corresponding TMGI is selected and used according to the NPN identifier information determined.

For example, the network identifier list includes but is not limited to at least one of: the PLMN identifier list; or the NPN identifier list.

The network identifier list may further include the cascade list obtained by cascading the PLMN identifier list and the NPN identifier list. Specifically, in the cascade list, the PLMN identifier list comes first and the NPN identifier list comes second.

For example, the network index includes the NPN index, and the network identifier list sent by the first node to the second node includes the PLMN identifier list and the NPN identifier list. Therefore, the second node may determine the identifier information corresponding to the NPN index in the PLMN identifier list and the NPN identifier list, and determine the identifier information as the NPN identifier information associated with the TMGI.

For another example, the network index includes the NPN index, and the network identifier list sent by the first node to the second node includes the cascade list obtained by cascading the PLMN identifier list and the NPN identifier list. Specifically, in the cascade list, the PLMN identifier list comes first and the NPN identifier list comes second. Therefore, the second node may determine the identifier information corresponding to the NPN index in the cascade list as the NPN identifier information associated with the TMGI.

For another example, the network index includes the NPN index, and the network identifier list sent by the first node to the second node includes the NPN identifier list. Therefore, the second node may determine the identifier information corresponding to the NPN index in the NPN identifier list as the NPN identifier information associated with the TMGI.

For another example, the network index includes the PLMN index, i.e. multiplexing an existing PLMN index, and the network identifier list sent by the first node to the second node includes the PLMN identifier list and the NPN identifier list. Therefore, the second node may determine the identifier information corresponding to the PLMN index in the PLMN identifier list and the NPN identifier list as the NPN identifier information associated with the TMGI.

For another example, the network index includes the PLMN index, i.e. multiplexing an existing PLMN index, and the network identifier list sent by the first node to the second node includes the cascade list obtained by cascading the PLMN identifier list and the NPN identifier list. Specifically, in the cascade list, the PLMN identifier list comes first and the NPN identifier list comes second. Therefore, the second node may determine the identifier information corresponding to the PLMN index in the cascade list as the NPN identifier information associated with the TMGI.

For another example, the network index includes the PLMN index, i.e. multiplexing an existing PLMN index, and the network identifier list sent by the first node to the second node includes the NPN identifier list. Therefore, the second node may determine the identifier information corresponding to the PLMN index in the NPN identifier list as the NPN identifier information associated with the TMGI.

For another example, the network index includes the PLMN index and the NPN index, and the network identifier list sent by the first node to the second node includes the PLMN identifier list and the NPN identifier list. Therefore, the second node may determine the identifier information corresponding to the NPN index in the PLMN identifier list and the NPN identifier list as the NPN identifier information associated with the TMGI.

For another example, the network index includes the PLMN index and the NPN index, and the network identifier list sent by the first node to the second node includes the cascade list obtained by cascading the PLMN identifier list and the NPN identifier list. Specifically, in the cascade list, the PLMN identifier list comes first and the NPN identifier list comes second. Therefore, the second node may determine the identifier information corresponding to the NPN index in the cascade list as the NPN identifier information associated with the TMGI.

For another example, the network index includes the PLMN index and the NPN index, and the network identifier list sent by the first node to the second node includes the NPN identifier list. Therefore, the second node may determine the identifier information corresponding to the NPN index in the NPN identifier list as the NPN identifier information associated with the TMGI.

The above is only an exemplary description, and a solution in which the network index is included in the first message such that the second node, according to the first message, determines the NPN identifier information associated with the TMGI should all fall within the protection scope of the present disclosure.

In an example, the first message may be the message including the MII.

The NPN identifier information associated with the TMGI included in the message including the MII may be associated with the entry in the MBS service list.

For example, the message including the MII includes the entry index of the MBS service list, such as mbs-Service-Index, and the NPN identifier information. The entry index of the MBS service list indicates the TMGI in the MBS service in which the NPN identifier included in the message including the MII applies. Further, after being combined with the PLMN identifier included in the TMGI in the entry of the MBS service list corresponding to the entry index of the MBS service list, the NPN identifier information associated with the TMGI is jointly indicated.

In an example, the TMGI may be the existing TMGI in the protocol that does not include the extension bit. In an embodiment, the TMGI may be a TMGI newly defined by the protocol. For example, the protocol newly defines a TMGI, and the newly defined TMGI may include the extension bit or may not include the extension bit, which is not limited by the present disclosure.

The base station as the first node may send the network identifier list to the terminal as the second node, the base station may send the first message including the TMGI to the terminal, and the first message further includes the network index. The terminal may determine the NPN identifier information associated with the TMGI according to the network identifier list and the network index, such that the terminal side and the network side have the same understanding of the network identifier list corresponding to the PLMN index, thereby ensuring the correct use of the TMGI.

Regarding the previous problem 2, in a case of performing interaction between the base stations (for example, in a handover process between the base stations), the network identifier lists in the SIB1 of different base stations are different, which will lead to different understandings of the PLMN index, that is, the network identifiers corresponding to the PLMN index are different.

In order to solve this problem, in embodiments of the present disclosure, it is defined that in a case where the first message interacts between the network side nodes, the first message includes the network identifier information. That is, in a case where the network side nodes interact, the network index is no longer indicated, thereby avoiding a problem of different understanding of the PLMN index due to different network identifier lists in the SIB1 of different base stations.

The base station as the first node (here, a current serving base station of the terminal, i.e. a source base station) may send the first message including the TMGI to the base station as the second node (here, a target base station to which the terminal is to be handed over), and the first message further includes the network identifier information. The target base station may determine the NPN identifier information associated with the TMGI according to the network identifier information.

In an example, the first message may be the message including the MII. For example, the first massage may be the handover preparation message including the MII. The NPN identifier information associated with the TMGI is indicated by the extension bit in the first message.

For example, the NPN identifier information may be indicated on the extension bit included in the first IE of the first message. The first IE is any one of the IEs that includes the extension bit in the first message.

In an example, the first message may be the message including the MII. For example, the first massage may be the handover preparation message including the MII. The extension bit is added to the first message to indicate the NPN identifier information associated with the TMGI.

The NPN identifier information associated with the TMGI included in the first message may be associated with the entry in the MBS service list.

For example, the message including the MII includes the entry index of the MBS service list, such as mbs-Service-Index, and the NPN identifier information. The entry index of the MBS service list indicates the TMGI in the MBS service in which the NPN identifier included in the message including the MII applies. Further, after being combined with the PLMN identifier included in the TMGI in the entry of the MBS service list corresponding to the entry index of the MBS service list, the NPN identifier information associated with the TMGI is jointly indicated.

For example, the message including the MII is the handover preparation message, and the handover preparation message includes the entry index of the MBS service list, such as mbs-Service-Index, and the NPN identifier information. The entry index of the MBS service list indicates the TMGI in the MBS service in which the handover preparation message including the MII applies. Further, after being combined with the PLMN identifier included in the TMGI in the entry of the MBS service list corresponding to the entry index of the MBS service list, the NPN identifier information associated with the TMGI is jointly indicated.

For example, the network identifier information includes the PLMN identifier, and the target base station determines the NPN identifier information including the PLMN identifier in information of the current cell associated with the TMGI, thereby obtaining the NPN identifier information associated with the TMGI. Further, the network identifier information is included in the TMGI.

For another example, the network identifier information includes the NPN identifier, and the target base station determines the NPN identifier as the NPN identifier information associated with the TMGI. Further, the network identifier information may be included in the TMGI, and the TMGI may be the newly defined TMGI. The NPN identifier may include the SNPN identifier (PLMN identifier + NID) and/or the PNI-NPN identifier (PLMN identifier + CAG identifier).

For another example, the network identifier information includes the PLMN identifier and the NPN identifier, and the target base station determines the NPN identifier information associated with the TMGI according to the network identifier information. The NPN identifier includes the NID and/or the CAG identifier. The target base station determines the SNPN identifier according to the PLMN identifier and the NID, and determines the PNI-NPN identifier according to the PLMN identifier and the CAG identifier.

Further, the PLMN identifier is included in the TMGI. The NPN identifier is included in the first IE in the first message, and the first IE is outside the TMGI. In an embodiment, the NPN identifier is associated with the first message including the TMGI.

Regarding the previous problem 3, in a case where a PLMN value in the existing TMGI is multiplexed to determine the NPN identifier information, the PLMN identifier corresponding to the NPN is the same as the PLMN identifier corresponding to the PLMN in the RAN sharing scenario, and the TMGI identifier may not be uniquely determined, resulting in inconsistent understanding of the TMGI of an MBS session identifier between the terminal and the base station or between the base station and the base station.

In order to solve this problem, it is defined in embodiments of the present disclosure that the network identifier included in the first message may be the PLMN identifier and/or the NPN identifier.

Specifically, the NPN identifier includes at least one of: the NID; the CAG identifier; the SNPN identifier; or the PIN-NPN identifier.

For example, the network identifier in the first message includes the PLMN identifier, and the second node may determine the NPN identifier information including the PLMN identifier in the information of the current cell associated with the TMGI, thereby obtaining the NPN identifier information associated with the TMGI.

For example, in a case where the network identifier in the first message includes the NPN identifier, the second node may directly determine the NPN identifier as the NPN identifier information associated with the TMGI.

For example, the NPN identifier is included in the first message, the NPN identifier includes the NID and/or the CAG identifier, and the second node may determine that the NPN identifier is associated with the first message including the TMGI. The TMGI includes the PLMN identifier, and accordingly, the second node may jointly determine the SNPN identifier according to the PLMN identifier included in the TMGI and the NID included in the first message, and/or jointly determine the PIN-NPN identifier according to the PLMN identifier included in the TMGI and the CAG identifier included in the first message.

For example, the network identifier in the first message includes the PLMN identifier and the NPN identifier, and the second node may determine the NPN identifier according to the PLMN identifier and the NPN identifier.

Based on the above solution, the second node may accurately determine the NPN identifier information, and then uniquely determine the TMGI identifier, such that a understanding of the TMGI of the MBS session identifier is consistent between the terminal and the base station or between the base station and the base station or between the base station and the base station.

In the above embodiment, in the RAN sharing scenario, it may be ensured that the NPN identifier information determined between nodes is the same, thereby improving the reliability of using the TMGI.

In some embodiments, taking the first node as the network side node and the second node as the terminal as an example, the above-described solution is further illustrated as follows.

Referring to FIG. 3, FIG. 3 is a schematic flowchart illustrating a method for transmitting information according to an illustrative embodiment, including the following steps:

In step 301, a network side node sends a first message including a TMGI to a terminal.

In an embodiment, the first message further includes a network index. The network index is used to determine, in a network identifier list, NPN identifier information associated with the TMGI.

The network index includes but is not limited to at least one of: an NPN index; or a PLMN index.

In an example, it may be ensured that the first message includes the network index through the implementation of a network.

In another embodiment, the first message may further include network identifier information.

In an example, the network identifier information includes but is not limited to at least one of: a PLMN identifier; or an NPN identifier.

The NPN identifier includes but is not limited to at least one of: an NID; a CAG identifier; an SNPN identifier; or a PIN-NPN identifier.

The SNPN identifier may be jointly determined by the PLMN identifier and the NID, and the PIN-NPN identifier may be jointly determined by the PLMN identifier and the CAG identifier.

In an example, the TMGI may include the PLMN identifier.

In an example, the NPN identifier may be included in a first IE in the first message. The first IE may be any one of the IEs including an extension bit in the first message.

In an example, the NPN identifier includes the NID and/or the CAG identifier. Since the SNPN identifier or the PNI-NPN identifier further needs to be determined by the PLMN identifier, the NPN identifier may be associated with the first message including the TMGI. The PLMN identifier is included in the TMGI.

In embodiments of the present disclosure, the first message may be a message including an MII, or other messages, which is not limited by the present disclosure.

In embodiments of the present disclosure, in a case where the first message includes the network index or the network identifier information, the TMGI may be an existing TMGI. That is, the TMGI may be an existing TMGI in a protocol that does not include the extension bit. In an embodiment, the TMGI may be a TMGI newly defined by the protocol. For example, the protocol newly defines a TMGI, and the newly defined TMGI may include the extension bit or may not include the extension bit, which is not limited by the present disclosure.

In step 302, the network side node sends the network identifier list to the terminal.

In embodiments of the present disclosure, the execution sequence of the above-described steps 301 and 302 is not limited. That is, step 301 may be performed first and then step 302, or step 302 may be performed first and then step 301.

For example, the network side node may send the network identifier list to the terminal via a system message, such as an SIB1.

For example, the network identifier list includes but is not limited to at least one of: the PLMN identifier list; or the NPN identifier list.

The network identifier list may further include a cascade list obtained by cascading the PLMN identifier list and the NPN identifier list. Specifically, in the cascade list, the PLMN identifier list comes first and the NPN identifier list comes second.

In step 303, the terminal determines the NPN identifier information associated with the TMGI according to the first message.

In an embodiment, the first message further includes the network index, and the terminal may determine the NPN identifier information associated with the TMGI according to the network index and the network identifier list.

In another embodiment, the first message further includes the network identifier, and the terminal may determine the NPN identifier information associated with the TMGI according to the network identifier.

The specific determination method is similar to step 202, and will not be described in detail here.

In the above embodiments, the network side node may send the first message including the TMGI to the terminal, and the terminal may determine, according to the first message, the NPN identifier information associated with the TMGI, thereby ensuring that the NPN identifier information determined between the network side node and the terminal is the same, and improving reliability of using the TMGI.

In some embodiments, taking the first node as the network side node and the second node as the network side node as an example, the above-described solution is further illustrated as follows.

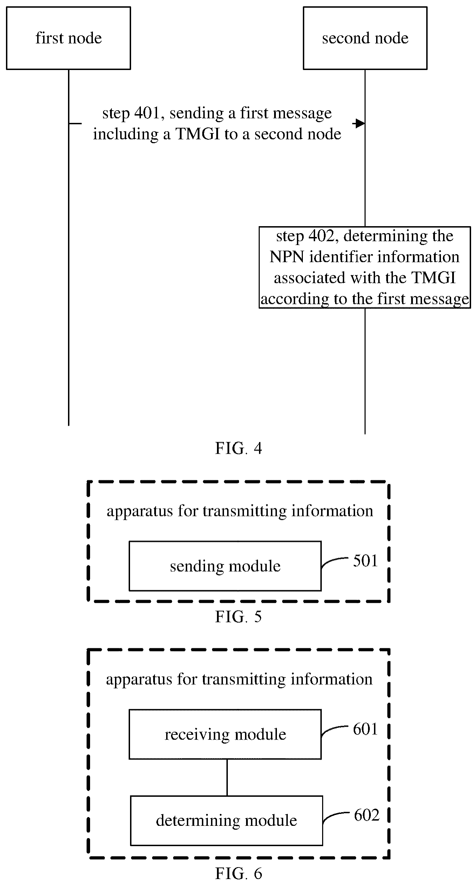

Referring to FIG. 4, FIG. 4 is a schematic flowchart illustrating a method for transmitting information according to an illustrative embodiment, including the following steps:

In step 401, a first node sends a first message including a TMGI to a second node.

In an embodiment, the first message may further include network identifier information.

In an example, the network identifier information includes but is not limited to at least one of: a PLMN identifier; or an NPN identifier.

The NPN identifier includes but is not limited to at least one of: an NID; a CAG identifier; an SNPN identifier; or a PIN-NPN identifier.

The SNPN identifier may be jointly determined by the PLMN identifier and the NID, and the PIN-NPN identifier may be jointly determined by the PLMN identifier and the CAG identifier.

In an example, the TMGI may include the PLMN identifier.

In an example, the NPN identifier may be included in a first IE in the first message. The first IE may be any one of the IEs including an extension bit in the first message.

In an example, the NPN identifier includes the NID and/or the CAG identifier. Since the SNPN identifier or the PNI-NPN identifier further needs to be determined by the PLMN identifier, the NPN identifier may be associated with the first message including the TMGI. The PLMN identifier is included in the TMGI.

In embodiments of the present disclosure, the TMGI may be an existing TMGI. That is, the TMGI may be an existing TMGI in a protocol that does not include the extension bit. In an embodiment, the TMGI may be a TMGI newly defined by the protocol. For example, the protocol newly defines a TMGI, and the newly defined TMGI may include the extension bit or may not include the extension bit, which is not limited by the present disclosure.

In embodiments of the present disclosure, the first message may be a message including an MII. For example, the first message may be a handover preparation message or other messages, which is not limited by the present disclosure.

The PLMN identifier is included in the TMGI. The NPN identifier is included in the first IE in the first message, and the first IE is outside the TMGI. In an embodiment, the NPN identifier is associated with the first message including the TMGI.

The first message may be the message including the MII. In a case where the message including the MII is sent by the terminal to the network side node or sent by the network side node to the terminal, the NPN identifier information indicated by the extension bit in the message including the MII may be ignored.

In an example, the first message may be the message including the MII, e.g., a handover preparation message including the MII, and the NPN identifier information associated with the TMGI is indicated by the extension bit in the first message.

For example, the NPN identifier information may be indicated on the extension bit included in the first IE of the first message. The first IE is any one of the IEs that includes the extension bit in the first message.

In an example, the first message may be the message including the MII. For example, the first message may be the handover preparation message including the MII. The extension bit is added to the first message to indicate the NPN identifier information associated with the TMGI.

The NPN identifier information associated with the TMGI included in the first message may be associated with an entry in an MBS service list.

For example, the message including the MII includes an entry index of the MBS service list, such as mbs-Service-Index, and the NPN identifier information. The entry index of the MBS service list indicates the TMGI in the MBS service in which the NPN identifier included in the message including the MII applies. Further, after being combined with the PLMN identifier included in the TMGI in the entry of the MBS service list corresponding to the entry index of the MBS service list, the NPN identifier information associated with the TMGI is jointly indicated.

For example, the message including the MII is the handover preparation message, and the handover preparation message includes the entry index of the MBS service list, such as mbs-Service-Index, and the NPN identifier information. The entry index of the MBS service list indicates the TMGI in the MBS service in which the handover preparation message including the MII applies. Further, after being combined with the PLMN identifier included in the TMGI in the entry of the MBS service list corresponding to the entry index of the MBS service list, the NPN identifier information associated with the TMGI is jointly indicated.

It may be ensured that the first message includes the network identifier information through the implementation of the network side node.

In step 402, the second node determines the NPN identifier information associated with the TMGI according to the first message.

Specifically, the second node may determine the network identifier information included in the first message as the NPN identifier information associated with the TMGI.

The specific implementation method is similar to the solution in step 202, in which the second node determines the NPN identifier information associated with the TMGI according to the network identifier information, and will not be described in detail here.

In the above embodiments, the first node may send the first message including the TMGI to the second node, and the second node may determine, according to the first message, the NPN identifier information associated with the TMGI, thereby ensuring that the NPN identifier information determined between the first node and the second node is the same, and improving reliability of using the TMGI.

Corresponding to the aforementioned embodiments of the application function implementing method, the present disclosure further provides embodiments of an application function implementing device.

Referring to FIG. 5, FIG. 5 is a block diagram illustrating an apparatus for transmitting information according to an illustrative embodiment. The device is applied to a first node, and includes:
a sending module 501 configured to send a first message including a TMGI to a second node, in which the first message is used by the second node to determine NPN identifier information associated with the TMGI.

In an embodiment, the first message further includes:
a network index, in which the network index is used to determine, in a network identifier list, the NPN identifier information associated with the TMGI.

In an embodiment, the network index includes at least one of:
an NPN index; or
a PLMN index.

In an embodiment, the sending module is further configured to send the network identifier list to the second node, to enable the second node determine, according to the network index and the network identifier list, the NPN identifier information associated with the TMGI.

In an embodiment, the network identifier list includes at least one of:
a PLMN identifier list; or
an NPN identifier list.

In an embodiment, the first message further includes:
network identifier information.

In an embodiment, the network identifier information includes at least one of:
a PLMN identifier; or
an NPN identifier.

In an embodiment, the NPN identifier includes at least one of:
an NID;
a CAG identifier;
an SNPN identifier; or
a PIN-NPN identifier.

In an embodiment, the NPN identifier includes the NID and/or the CAG identifier, and the NPN identifier is associated with the first message including the TMGI.

In an embodiment, the first message includes a message including an MII.

In an embodiment, the TMGI is an existing TMGI, or the TMGI is a TMGI newly defined by a protocol.

In an embodiment, the first node is a terminal, and the second node is a network side node; or
the first node is a network side node, and the second node is a terminal; or
the first node is a network side node, and the second node is a network side node.

The specific implementation is similar to that of the embodiment shown in FIG.1 above, and will not be described in detail here.

Referring to FIG. 6, FIG. 6 is a block diagram illustrating another apparatus for transmitting information according to an illustrative embodiment. The device is applied to a second node, and includes:
a receiving module 601 configured to receive a first message including a TMGI sent by a first node; and
a determining module 602 configured to determine, according to the first message, NPN identifier information associated with the TMGI.

In an embodiment, the first message further includes:
a network index, in which the network index is used to determine, in a network identifier list, the NPN identifier information associated with the TMGI.

In an embodiment, the network index includes at least one of:
an NPN index; or
a PLMN index.

In an embodiment, the receiving module is further configured to receive the network identifier list sent by the first node.

In an embodiment, the network identifier list includes at least one of:
a PLMN identifier list; or
an NPN identifier list.

In an embodiment, the determining module is further configured to determine, in the network identifier list, a network identifier corresponding to the network index as the NPN identifier information associated with the TMGI.

In an embodiment, the first message further includes:
network identifier information.

In an embodiment, the network identifier information includes at least one of:
a PLMN identifier; or
an NPN identifier.

In an embodiment, the NPN identifier includes at least one of:
an NID;
a CAG identifier;
an SNPN identifier; or
a PIN-NPN identifier.

In an embodiment, the NPN identifier includes the NID and/or the CAG identifier, and the NPN identifier is associated with the first message including the TMGI.

In an embodiment, the determining module is further configured to determine the network identifier information included in the first message as the NPN identifier information associated with the TMGI.

In an embodiment, the first message includes a message including an MII.

In an embodiment, the TMGI is an existing TMGI, or the TMGI is a TMGI newly defined by a protocol.

In an embodiment, the first node is a terminal, and the second node is a network side node; or
the first node is a network side node, and the second node is a terminal; or
the first node is a network side node, and the second node is a network side node.

The specific implementation is similar to that of the embodiment shown in FIG. 2, and will not be described in detail here.

Since the device embodiments substantially correspond to the method embodiments, reference is made to the partial description of the method embodiments. The above-described device embodiments are merely for the purpose of illustration, in which the units described as separate components may be or may not be physically separated, and the components displayed as units may be or may not be physical units, that is, either located at one place or distributed onto a plurality of network units. The object of embodiments of the present disclosure may be achieved by some or all of the modules in accordance with practical requirements. It would be appreciated and executable by those skilled in the art without creative efforts.

Accordingly, the present disclosure further provides a processor-readable storage medium having a computer program stored thereon, in which the computer program is configured to perform any one of the methods for transmitting information described above on the first node.

Accordingly, the present disclosure further provides a processor-readable storage medium having a computer program stored thereon, in which the computer program is configured to perform any one of the methods for transmitting information described above on the second node.

Accordingly, the present disclosure further provides a device for transmitting information, including:
a processor; and
a memory for storing processor-executable instructions;
in which the processor is configured to perform any one of the methods for transmitting information described above on the first node.

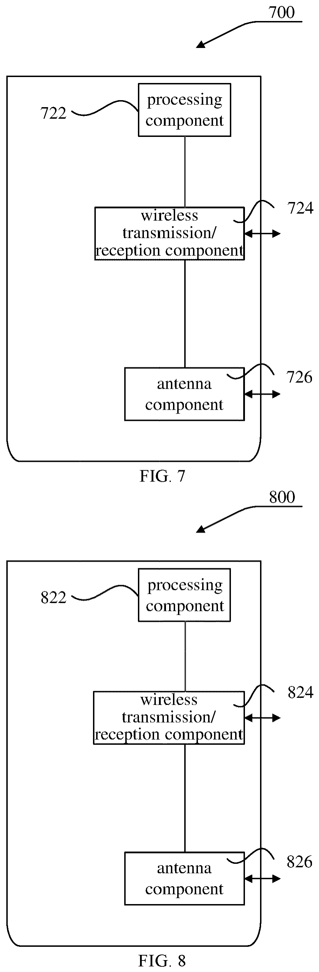

As shown in FIG. 7, FIG. 7 is a schematic structural diagram illustrating a device 700 for transmitting information according to an illustrative embodiment of the present disclosure. The device 700 may be provided as a terminal or a network side node. Referring to FIG. 7, the device 700 includes a processing component 722, a wireless transmission/reception component 724, an antenna component 726, and a signal processing part specific to a wireless interface. The processing component 722 may further include at least one processor.

One of the processors in the processing component 722 may be configured to perform any one of the methods for transmitting information described above on a first node.

Accordingly, the present disclosure further provides a device for configuring a subband, including:
a processor; and
a memory storing instructions executable by the processor;
in which the processor is configured to perform any one of the methods for transmitting information described above on the first node.

As shown in FIG. 8, FIG. 8 is a schematic structural diagram illustrating a device 700 for transmitting information according to an illustrative embodiment of the present disclosure. The device 800 may be provided as a terminal or a network side node. Referring to FIG. 8, the device 800 includes a processing component 822, a wireless transmission/reception component 824, an antenna component 826, and a signal processing part specific to a wireless interface. The processing component 822 may further include at least one processor.

One of the processors in the processing component 822 may be configured to perform any one of the methods for transmitting information described above on a second node.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including common knowledge or conventional technical means known in the art but not disclosed in the present disclosure. The specification and examples should be considered as illustrative only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

1. A method for transmitting information, performed by a first node, comprising:
sending a first message comprising a temporary mobile group identity (TMGI) to a second node, wherein the first message is used by the second node to determine non-public network (NPN) identifier information associated with the TMGI.

2. The method according to claim 1, wherein the first message further comprises:
a network index, wherein the network index is used to determine the NPN identifier information associated with the TMGI in a network identifier list.

3. The method according to claim 2, wherein the network index comprises at least one of:
an NPN index; or
a public land mobile network (PLMN) index.

4. The method according to any one of claims 1 to 3, further comprising:
sending the network identifier list to the second node, to enable the second node to determine, according to the network index and the network identifier list, the NPN identifier information associated with the TMGI.

5. The method according to claim 4, wherein the network identifier list comprises at least one of:
a PLMN identifier list; or
an NPN identifier list.

6. The method according to claim 1, wherein the first message further comprises:
network identifier information.

7. The method according to claim 6, wherein the network identifier information comprises at least one of:
a PLMN identifier; or
an NPN identifier.

8. The method according to claim 7, wherein the NPN identifier comprises at least one of:
a network identifier (NID);
a closed access group (CAG) identifier;
a stand-alone non-public network (SNPN) identifier; or
a public network integrated NPN (PIN-NPN) identifier.

9. The method according to claim 7, wherein the NPN identifier comprises an NID and/or a CAG identifier, and the NPN identifier is associated with the first message comprising the TMGI.

10. The method according to any one of claims 1 to 9, wherein the first message comprises a message comprising a multicast broadcast service interest indication (MII).

11. The method according to any one of claims 1 to 10, wherein the TMGI is an existing TMGI, or the TMGI is a TMGI newly defined by a protocol.

12. The method according to any one of claims 1 to 11, wherein the first node is a terminal, and the second node is a network side node; or
the first node is a network side node, and the second node is a terminal; or
the first node is a network side node, and the second node is a network side node.

13. A method for transmitting information, performed by a second node, comprising:
receiving a first message comprising a temporary mobile group identity (TMGI) sent by a first node; and
determining, according to the first message, non-public network (NPN) identifier information associated with the TMGI.

14. The method according to claim 13, wherein the first message further comprises:
a network index, wherein the network index is used to determine the NPN identifier information associated with the TMGI in a network identifier list.

15. The method according to claim 14, wherein the network index comprises at least one of:
an NPN index; or
a public land mobile network (PLMN) index.

16. The method according to claim 14 or 15, further comprising:
receiving the network identifier list sent by the first node.

17. The method according to claim 16, wherein the network identifier list comprises at least one of:
a PLMN identifier list; or
an NPN identifier list.

18. The method according to claim 16 or 17, wherein determining, according to the first message, the NPN identifier information associated with the TMGI comprises:
determining, in the network identifier list, a network identifier corresponding to the network index as the NPN identifier information associated with the TMGI.

19. The method according to claim 13, wherein the first message further comprises:
network identifier information.

20. The method according to claim 19, wherein the network identifier information comprises at least one of:
a PLMN identifier; or
an NPN identifier.

21. The method according to claim 20, wherein the NPN identifier comprises at least one of:
a network identifier (NID);
a closed access group (CAG) identifier;
a stand-alone non-public network (SNPN) identifier; or
a public network integrated NPN (PIN-NPN) identifier.

22. The method according to claim 20, wherein the NPN identifier comprises an NID and/or a CAG identifier, and the NPN identifier is associated with the first message comprising the TMGI.

23. The method according to any one of claims 19 to 22, wherein determining, according to the first message, the NPN identifier information associated with the TMGI comprises:
determining the network identifier information comprised in the first message as the NPN identifier information associated with the TMGI.

24. The method according to any one of claims 13 to 23, wherein the first message comprising a message comprising a multicast broadcast service interest indication (MII).

25. The method according to any one of claims 13 to 24, wherein the TMGI is an existing TMGI, or the TMGI is a TMGI newly defined by a protocol.

26. The method according to any one of claims 13 to 25, wherein the first node is a terminal, and the second node is a network side node; or
the first node is a network side node, and the second node is a terminal; or
the first node is a network side node, and the second node is a network side node.

27. An apparatus for transmitting information, applied to a first node, comprising:
a sending module configured to send a first message comprising a temporary mobile group identity (TMGI) to a second node, wherein the first message is used by the second node to determine non-public network (NPN) identifier information associated with the TMGI.

28. An apparatus for transmitting information, applied to a second node, comprising:
a receiving module configured to receive a first message comprising a temporary mobile group identity (TMGI) sent by a first node; and
a determining module configured to determine, according to the first message, non-public network (NPN) identifier information associated with the TMGI.

29. A processor-readable storage medium having a computer program stored thereon, wherein the computer program is configured to execute the method for transmitting information according to any one of claims 1 to 12.

30. A processor-readable storage medium having a computer program stored thereon, wherein the computer program is configured to execute the method for transmitting information according to any one of claims 13 to 26.

31. A device for transmitting information, comprising:
a processor; and
a memory for storing processor-executable instructions;
wherein the processor is configured to perform the method for transmitting information according to any one of claims 1 to 12.

32. A device for transmitting information, comprising:
a processor; and
a memory for storing processor-executable instructions;
wherein the processor is configured to perform the method for transmitting information according to any one of claims 13 to 26.
